# EUROPEAN PATENT APPLICATION

(11) **EP 2 270 741 A1**
(43) Date of publication of application: **05.01.2011**
(21) Application number: 09290511.6
(22) Date of filing: 30.06.2009
(51) Int. Cl.: G06Q 30/00

(54) **Personalized exposure strategy**

(71) Applicant: Alcatel Lucent, 75008 Paris (FR)
(72) Inventor: Bouzid, Makram, 91620 Nozay (FR); Kostadinov, Dimitre Davidov, 91620 Nozay (FR); Bernier, Cédric, 91620 Nozay (FR); Aghasaryan, Armen, 91620 Nozay (FR)
(74) Representative: Hedarchet, Stéphane

(57) **Abstract**

A method for adapting the ad exposure strategy to users, by personalizing the effective frequency of displaying an ad to the user/group of users according to at least a part of the following elements:
The semantic ad description
The ad apparition history
The user behaviour
The user context/intention
The goal of the advertising campaign:
The following parameters are correlated with the personalized effective frequency:
Exposure period (limited by the duration of the advertising campaign or adapted to the user),

Exposure distribution (e.g. expose the user more frequently the first 2 days and decrease progressively the number of exposures for the rest of the campaign).

## Description

The present invention is related to a method and a device for adapting ad exposure strategy to users.

In classical solutions, the exposure strategy is fixed by the advertiser according to his budget. For example, as described in US Patent 7,158,943, the ad display frequency is specified by the advertiser and the users are selected based on their profile matching with advertiser constraints including frequency.

According to advanced solutions, it is requested an expert to fix the effective frequency of ad exposure strategy according to targeted population.

In Google Audio Ads, the frequency of an ad display is set by the system, e.g. to a range of 3.0 to 7.0, and advertisers can optionally adjust the frequency manually according to their goals, budget, constraints (i.e. a manual frequency customization).

The Applicant has filed on December the 13^{th} of 2007 a French patent application referenced FR 0708691 and entitled "Procédé de diffusion de messages publicitaires à un terminal de communication". This patent application is about allowing the user to customize manually (through a Generic User Interface) his exposure to ads according to his ad receiving acceptance and his context/preferences (same configuration for all ads).

The Applicant has as well filed on April the 15^{th} of 2008 a French patent application referenced FR 0852523 and entitled "Système et procédé de sélection d'un message apte à être délivré à un utilisateur de services de télécommunications". This patent application is about switching between different ads according to user marketing positioning states (e.g. changes in user mind/awareness of a product/ad).

In *"*Beyond effective frequency: evaluating media schedules using frequency value planning", Journal of Advertising Research, vol. 42, 2002, p. 33-47, by Cannon H., Leckenby J. and Abernethy A, the effective frequency is used to adapt the budget to the goal of the campaign. This is achieved by first estimating the exposure distribution of the population after displaying the ad a given number of times (i.e. what part of the population will be exposed 1, 2, 3, ..., n times) and then inferring the expected response value associated to each level of exposure (i.e. the part of the population for which the campaign will succeed). In this paper, the effective frequency is considered globally for the whole population and there is no adaptation of the effective frequency according to a particular user or group of users. In addition, the advertiser can only change the advertising campaign budget, but cannot choose to display the ad to a subgroup of users whose effective frequency enables achieving the campaign's goal subject to a given budget.

As a result, targeting a user/group of users with an advertisement (ad) is not sufficient to get their interest and convince them to e.g. click on the ad (in case of ads displayed on a web page) or e.g. to buy the product (in case of TV ads). In fact, users should be exposed to the ad a couple of times to get their interest. The number of times an ad should be displayed varies from one user to another (some users can be convinced more easily than others), and depends on the ad itself (e.g. complex/simple to understand). Also, the frequency of an ad display depends on user (e.g. their availability, attitude, etc.). The number of ad exposures is called the "Effective Frequency" (EF) that represents a major part of ad Exposure Strategy (ES). All the considerations above determine an optimal ES. The problem of current targeting approaches is that the EF is defined by the advertiser according to his budget (the mentioned parameters are not taken into account at all), and in best cases the ES is fixed by an expert according to targeted population (i.e. same ES for all users) or by the user themselves, resulting in less successful ad campaigns.

The present invention aims at solving the above-mentioned problems.

The object of the present invention is a method for adapting the ad exposure strategy to users, by personalizing the effective frequency of displaying an ad to the user/group of users according to at least a part of the following elements:
■ The semantic ad description which includes
   - the ad's level of complexity: e.g. complex, simple, etc.,
   - the type of the message it provides: e.g. hidden, direct, etc.,
■ The ad apparition history: decreases the frequency when the number of apparitions increases,
■ The user behaviour: e.g. easy to convince, it takes time to get their trust, etc. A learning step may be used to for example learn how many times an ad should be displayed to a user to be "sure" that if they want to buy the product, they would have done it,
■ The user context/intention: e.g. the user is trying to buy something, searching for a particular content, discovering a web site, etc.
■ The goal of the advertising campaign:
   - close a sale,
   - communicating,
   - increase awareness of a product,

The following parameters are correlated with the personalized effective frequency:
■ Exposure period (limited by the duration of the advertising campaign or adapted to the user),
■ Exposure distribution (e.g. expose the user more frequently the first 2 days and decrease progressively the number of exposures for the rest of the campaign).

The object of the present invention, according to an embodiment, is a method for adapting a personalized exposure strategy for a user or a group of users according to any type of advertisement, **characterized in that**:
the exposure strategy representing a set of parameters such as a frequency of exposure, a number of exposures, a period of exposure, a maximal probability that a user receives the message of an ad of the given type,
at least an advertiser providing a broker agent with advertising campaign constraints/criteria for at least an ad,
the broker agent matching the advertising campaign constraints to the personalized exposure strategies of users in order to identify a subset of users to be exposed to the ad,
when selecting an ad for a given user, the broker agent considering their exposure strategies by implementing the following steps:
   - storing all personalized exposure strategies related to users,
   - storing the history of all ads displayed to users,
   - learning exposure strategies, such step comprising:
      - exploiting the data from the stored history of all ads displayed to users
      - analyzing past actions of users to capture patterns of user behavior
      - inferring from last sub-steps personalized exposure strategies of users and/or to update the existing ones,
   - computing the most critical ads which have to be displayed to the user in order to satisfy the exposure strategies as a function of analysis results of the past exposures of the user to the preselected ads
   - selecting an ad for the user according to the result of the last step and displaying according to the appropriate strategy, while updating the repository of Ad display History for future ad selections.

The object of the present invention, according to another embodiment, is a device for adapting a personalized exposure strategy for a user or a group of users according to any type of advertisement, **characterized in that**:
the exposure strategy representing a set of parameters such as a frequency of exposure, a number of exposures, a period of exposure, a maximal probability that a user receives the message of an ad of the given type,
at least an advertiser providing a broker agent with advertising campaign constraints/criteria for at least an ad,
the broker agent matching the advertising campaign constraints to the personalized exposure strategies of users in order to identify a subset of users to be exposed to the ad,
said device comprising the following modules:
   - means for storing all personalized exposure strategies related to users,
   - means for storing the history of all ads displayed to users,
   - means for learning exposure strategies, comprising:
      - at least an input for exploiting the data from the stored history of all ads displayed to users, and for analyzing past actions of users to capture patterns of user behavior,
      - processing means for inferring from said data and said analyzed past actions personalized exposure strategies of users and/or to update the existing ones,
   - means for computing the most critical ads which have to be displayed to the user in order to satisfy the exposure strategies as a function of analysis results of the past exposures of the user to the preselected ads,
   - means for selecting an ad for the user according to the output of the computing means,
   - means for displaying according to the appropriate strategy,
   - means for updating the repository of Ad display History for future ad selections.

According to an embodiment, the device according to the invention comprises means for adapting a given strategy to the user's profile and context.

Other objects and further features of the present invention will be apparent from the following detailed description when read in conjunction with the accompanying drawings:
Fig. 1 schematically illustrates an embodiment of a personalized ad exposure strategy,
Fig. 2 schematically illustrates a detailed description of an embodiment of a personalized ad exposure strategy.

A description will hereinafter be given of embodiments of the present invention, by referring to the drawings.

Usually, there are three actors in the process of targeted advertising:
- the *advertiser* who wants to make an advertising campaign,
- the *users* who will be exposed to the advertisements of advertisers and
- the *broker* who is a middleman between advertisers and users.

In what follows it will be explained how the present invention affects each of the actors.

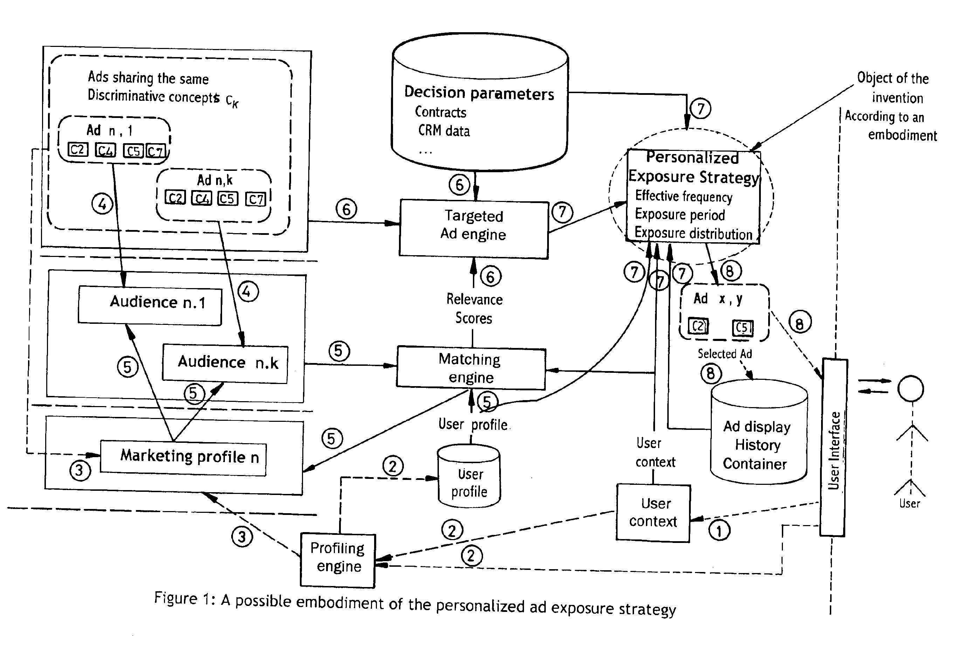

In one embodiment of the personalized effective frequency as depicted in Figure 1, the contexts and the preferences of users are inferred from their interaction with the application/ad personalization system (as depicted through references (1) and (2). Each ad is associated with a set of discriminative concepts/criteria (e.g. age, revenue, etc.) which are used to define the audience targeted by the ad (i.e. range of values of discriminative concepts e.g. age ∈ [25, 35], revenue >1500€, etc.) (4). By taking the discriminative concepts of ads and the user profiles, a marketing profile is inferred for each user, containing known values of discriminative concepts (e.g. age = 28, revenue = 1900€, etc.) (3). Then, each user is associated to the subset of audiences to which they belong (5).

When a user connects to the application, a contextualized profile can be computed corresponding to the preferences which hold in the current context ((1) and (2)). In order to select a targeted ad for a user, relevance scores are computed for the ads based on previously determined audience he belongs to (6). Relevance scores are computed using advertiser/publisher decision parameters, like contracts, CRM data, etc., and closeness of user marketing profiles to ad audiences.

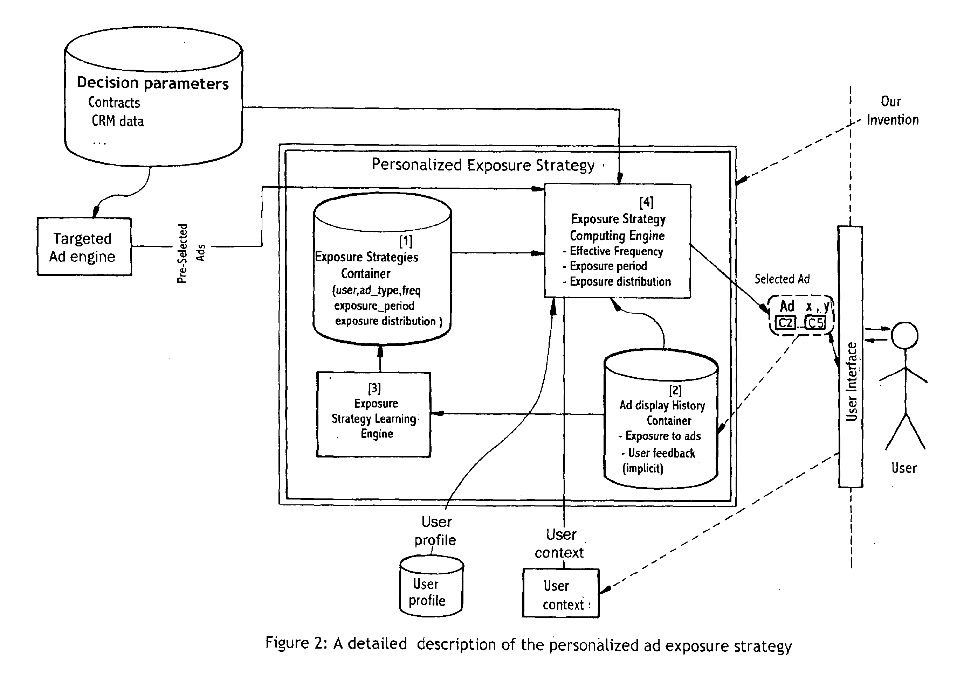

The present invention appears as a post filtering phase of targeted advertisement. It comprises building a method for adapting a *personalized exposure strategy* for each user or group of users according to each type of advertisement (complexity level, type of message, etc.). An exposure strategy represents a set of parameters such as frequency of exposure, number of exposures, period of exposure, maximal probability that a user receives the message of an ad of the given type etc. It shows how a given user should be exposed to an advertisement of a given type in order to reach the maximal probability that the user receives the message of the ad. Dealing with a personalized exposure strategy consists in three main steps:
1. The advertiser provides the broker with advertising campaign constraints/criteria for each ad. Constraints include the budget of the campaign, its duration and the desired result (number of users who will receive the message),
2. The broker matches the advertising campaign constraints to the personalized exposure strategies of users in order to identify a subset of users to be exposed to the ad. The so obtained subset of users should enable fulfilling the desired result of the campaign, subject to its duration and budget constraints. Consider for example an advertiser having a budget of 300,000€ for its campaign who wants to close 150,000 sales in 2 weeks when displaying the ad once costs 0.30€. First, only users who can be effectively exposed in 2 weeks to the advertisement should be targeted. Then, the satisfaction of desired result should be checked and if there is not a subset of users that enables fulfilling the requirements of the advertiser, the broker can recommend him to change his constraints (budget, campaign duration, desired result, etc). As an example, consider a subset of users having an effective frequency of 4 ads such as 50% of users exposed effectively usually buy the product. The maximal expected result of the campaign on this subset of users is 125,000 sales as only 250,000 users can be effectively exposed (1,000,000 diffusions of the ad and 4 exposures per user) and only half of them will effectively buy the product. Consequently, it is necessary to find another subset of users having a smaller effective frequency or a greater selling rate.
3. When selecting an ad for a given user, the broker considers their exposure strategies (7). The way this is done is depicted in Figure 2, consisting of the following components:
   [1] **Exposure Strategies Container**
      This module stores all personalized exposure strategies of users.
   [2] **Ad display History Container**
      This module is a warehouse which contains the history of all ads displayed to users. It includes information such as the moment when the ad was displayed, the action performed on the user, etc.
   [3] **Exposure Strategy Learning Engine**
      The Exposure Strategy Learning Engine exploits the data from the "Ad display History Container" to infer personalized exposure strategies of users and/or to update the existing ones. It analyses past actions of users in order to capture patterns of user behaviour (buying a product after n exposures to the ad advertiseing it, intolerance to ads displayed too often etc.). The so obtained patterns serve as bases to form and/or to update the personalized exposure strategies which are stored into the "Exposure Strategies Container".
   [4] **Exposure Strategy Computing Engine**
      This is the main component of the invention. It is used to select the ad to be displayed to a given user by taking into account:
      - the preselected ads by the targeted ad engine,
      - the decision parameters for targeted advertising,
      - the history of exposure of the user to ads,
      - the exposure strategies of the user, and
      - the user's context and profile.

The Exposure Strategy Computing Engine analyses the past exposures of the user to the preselected ads and chooses the most critical ads which should be displayed to the user in order to satisfy the exposure strategies. It is also able to adapt a given strategy to the user's profile and context. For example, if the user will go on holyday soon, the Exposure Strategy Computing Engine can decide to increase the exposure frequency of ads in order to satisfy the requirements of the advertising campaign. In this case, the module can also decide to prune some advertising campaigns if the user cannot be exposed effectively to all ads in the remaining period (e.g. before going on holyday).

An ad is finally selected for the user according to the result of the last step and is displayed to them according to the appropriate strategy, while updating the repository of Ad display History Container for future ad selections (Figure 1 - (8)).

## Claims

1. Method for adapting a personalized exposure strategy for a user or a group of users according to any type of advertisement, **characterized in that**:
the exposure strategy representing a set of parameters such as a frequency of exposure, a number of exposures, a period of exposure, a maximal probability that a user receives the message of an ad of the given type,
at least an advertiser providing a broker agent with advertising campaign constraints/criteria for at least an ad,
the broker agent matching the advertising campaign constraints to the personalized exposure strategies of users in order to identify a subset of users to be exposed to the ad,
when selecting an ad for a given user, the broker agent considering their exposure strategies by implementing the following steps:
- storing all personalized exposure strategies related to users,
- storing the history of all ads displayed to users,
- learning exposure strategies, such step comprising:
- exploiting the data from the stored history of all ads displayed to users
- analyzing past actions of users to capture patterns of user behavior
- inferring from last sub-steps personalized exposure strategies of users and/or to update the existing ones,
- computing the most critical ads which have to be displayed to the user in order to satisfy the exposure strategies as a function of analysis results of the past exposures of the user to the preselected ads
- selecting an ad for the user according to the result of the last step and displaying according to the appropriate strategy, while updating the repository of Ad display History for future ad selections.

2. Device for adapting a personalized exposure strategy for a user or a group of users according to any type of advertisement, **characterized in that**:
the exposure strategy representing a set of parameters such as a frequency of exposure, a number of exposures, a period of exposure, a maximal probability that a user receives the message of an ad of the given type,
at least an advertiser providing a broker agent with advertising campaign constraints/criteria for at least an ad,
the broker agent matching the advertising campaign constraints to the personalized exposure strategies of users in order to identify a subset of users to be exposed to the ad,
said device comprising the following modules:
- means for storing all personalized exposure strategies related to users,
- means for storing the history of all ads displayed to users,
- means for learning exposure strategies, comprising:
- at least an input for exploiting the data from the stored history of all ads displayed to users, and for analyzing past actions of users to capture patterns of user behavior,
- processing means for inferring from said data and said analyzed past actions personalized exposure strategies of users and/or to update the existing ones,
- means for computing the most critical ads which have to be displayed to the user in order to satisfy the exposure strategies as a function of analysis results of the past exposures of the user to the preselected ads,
- means for selecting an ad for the user according to the output of the computing means,
- means for displaying according to the appropriate strategy,
- means for updating the repository of Ad display History for future ad selections.

3. Device according to claim 2, **characterized in that** it comprises means for adapting a given strategy to the user's profile and context.
